# EUROPEAN PATENT SPECIFICATION

(11) **EP 3 199 274 B1**
(45) Date of publication and mention of the grant of the patent: **15.04.2020**
(21) Application number: 16153286.6
(22) Date of filing: 29.01.2016
(51) Int. Cl.: B23B 27/10, B23B 27/16, B23C 5/22

(54) **A CUTTING TOOL**
SCHNEIDWERKZEUG
OUTIL DE DÉCOUPAGE

(43) Date of publication of application: 02.08.2017
(73) Proprietor: Seco Tools AB, 737 82 Fagersta (SE)
(72) Inventor: JONSSON, Mats, SE 776 92 Hedemora (SE); LARSSON, Andreas J, 732 47 Arboga (SE); THELIN, Jimmy, 737 91 Fagersta (SE)
(74) Representative: Sandvik

(56) References cited:
- EP-A1- 1 495 821
- DE-A1- 3 520 179
- DE-A1-102007 023 936
- DE-U1-202008 003 866
- US-A- 3 102 326
- US-A- 4 202 650
- US-B2- 6 702 528

## Description

### FIELD OF THE INVENTION

The present invention relates to a cutting tool for metal chip removing machining in accordance with the preamble of claim 1. An example of such a cutting tool is known from U.S. Patent No. 6,702,528.

### BACKGROUND

Typically, tool holder mechanisms utilize an insert-receiving seat being formed in the body of the tool holder. However, forming the insert-receiving seat in the body of the tool holder is time consuming and difficult to machine within manufacturing tolerances, thereby increasing the manufacturing cost of the tool holder. Applicant's U.S. Patent No. 6,702,528 relates to a tool and a holder, wherein the seat comprises a well-defined line of contact in relation to the cutting insert. This enables lengthy use of one and the same holder for a lot of different shims having different geometries. However, there is a need to provide an improved tool holder for clamping an insert that is simple to manufacture and has improved manufacturing tolerances.

It is desirable to improve durability of the cutting insert. It is desirable to facilitate manufacturing of the seat. It is further desirable to improve precision of the seat.

### SUMMARY OF THE INVENTION

According to the present invention, a cutting tool is provided having a tool holder body having a shank portion and a head portion, an indexable cutting insert in a cutting insert seat comprising a first convex wall and a second convex wall and at least one bottom surface, at which the cutting insert is supposed to abut, wherein the convex walls are constituted by separate pins, which are perpendicular or substantially perpendicular to each other when seen in a side view and wherein the second convex wall is situated below the cutting edge to obviate drawbacks of prior art. The first convex wall is constituted by a first pin that is adapted to present a line of contact in relation to the cutting insert that is parallel or substantially parallel to the at least one bottom surface, and the second convex wall is constituted by a second pin that is adapted to present a line of contact in relation to the cutting insert that is non-perpendicular to the at least one bottom surface to minimize manufacturing complexity of the insert seat. The second pin protrudes from the bottom surface a distance that is smaller than a height of the cutting insert to make sure that the pin does not reach a cutting edge and therefore cannot damage or negatively influence the cutting edge.

According to an embodiment of the present invention, each pin is stationarily mounted to the shank and formed of a harder material than the shank portion that plays a key role in the holder's increased rigidity.

According to another embodiment of the present invention each pin is formed of a harder material than the shank portion that ensures precise insert positioning from insert to insert.

According to another embodiment of the present invention, a clamping screw extends through the cutting insert, a center axis of said clamping screw extending parallel or substantially parallel to a center axis of the second pin to further improve stability of the cutting insert position.

According to another embodiment of the present invention, a second cavity and the second pin extend at an angle to the at least one bottom surface in the range of less than 90° and at least 69° to be able to hold a variety of insert shapes.

According to another embodiment of the present invention, an inclination of the second pin is the same as a clearance surface angle of an associated side of the cutting insert for optimal fit.

According to another embodiment of the present invention, the second pin inclines at an angle relative to a normal to the at least one bottom surface that is greater than 0° and not more than 21° to fit against a clearance surface of a cutting insert.

According to another embodiment of the present invention, a bisector bisects an active cutting corner of the cutting insert and wherein the second pin is located at an opposite side of the bisector relative to a major portion of the first pin to be able to hold a variety of cutting insert geometries.

According to another embodiment of the present invention, the second pin extends deeper into the head portion than a height of an exposed part thereof that protrudes above the bottom surface to improve stability of the seat.

According to another embodiment of the present invention, the bottom surface is flat all around the second cavity to facilitate manufacture of the seat.

According to another embodiment of the present invention, the tool has a coolant conduit and comprises at least one coolant channel in flow communication with the coolant conduit to cool the cutting insert and remove generated chips.

### BRIEF DESCRIPTION OF THE DRAWINGS

The features and advantages of the present invention are well understood by reading the following detailed description in conjunction with the drawings in which like numerals indicate similar elements and in which:
FIG. 1A is a perspective view of a cutting tool according to an embodiment of the present invention;
FIG. 1B is a front view of a monobloc forming part of the cutting tool in Fig. 1A without a cutting insert;
FIG. 1C is a top view of the monobloc;
FIG. 1D is a side view of the cutting tool without a cutting insert;
FIG. 1E is a top view of the monobloc, partially in section;
FIG. 2A is a perspective view of a cutting tool according to another embodiment of the present invention;
FIG. 2B is a perspective view of a tool holder body of the cutting tool shown in FIG. 2A:
FIG. 2C is an enlarged perspective view of the cutting tool shown in FIG. 2A:
FIG. 2D is a front view of the cutting tool in Fig. 2A;
FIG. 2E is a top view of the cutting tool without a cutting insert;
FIG. 2F is a side view of the cutting tool;
FIG. 2G is a top view of a monobloc forming part of the cutting tool, partially in section;
FIG. 3A is a perspective view from below of a cutting tool according to another embodiment of the present invention; and
FIG. 3B is a perspective view of a tool holder body of the cutting tool in FIG. 3A.
FIG. 3C is a perspective enlarged view of the cutting tool in FIG. 3A.

Each figure in the drawings is drawn to scale. However, sizes of the cutting tools or components thereof maybe reduced or enlarged by a certain amount.

### DETAILED DESCRIPTION

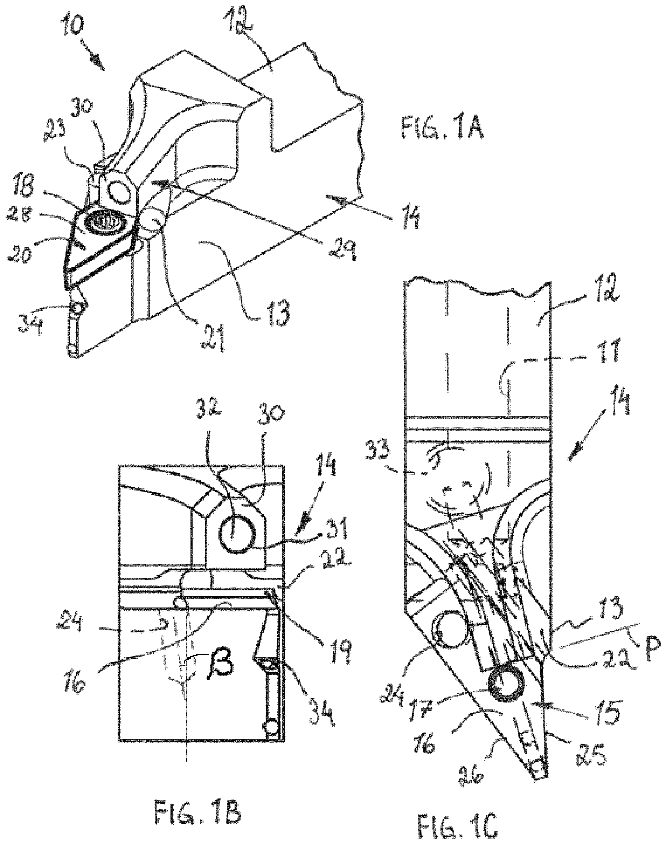

Reference is made to FIGS. 1A-1E showing a cutting tool 10 having a coolant conduit 11 in accordance with an aspect of the present invention. The shown cutting tool 10 may be a turning tool for external metal machining, preferably for use in a Swiss-type lathe. A Swiss-type lathe is a variety of turning machine that feeds the stock through a guide bushing. This means the turning tool can always cut the stock near the bushing, and therefore close to the point of support, no matter how long the workpiece. The machine feeds the work out of the spindle and past the tool as it moves. This makes the CNC Swiss-type particularly effective for long and slender turned parts. Typically, on the Swiss machine, the turning tool is stationary and the workpiece advances. Normally, a cutting tool for a Swiss-type lathe is relatively small, for example less than 20 cm from end to end and less than 3 cm in height.

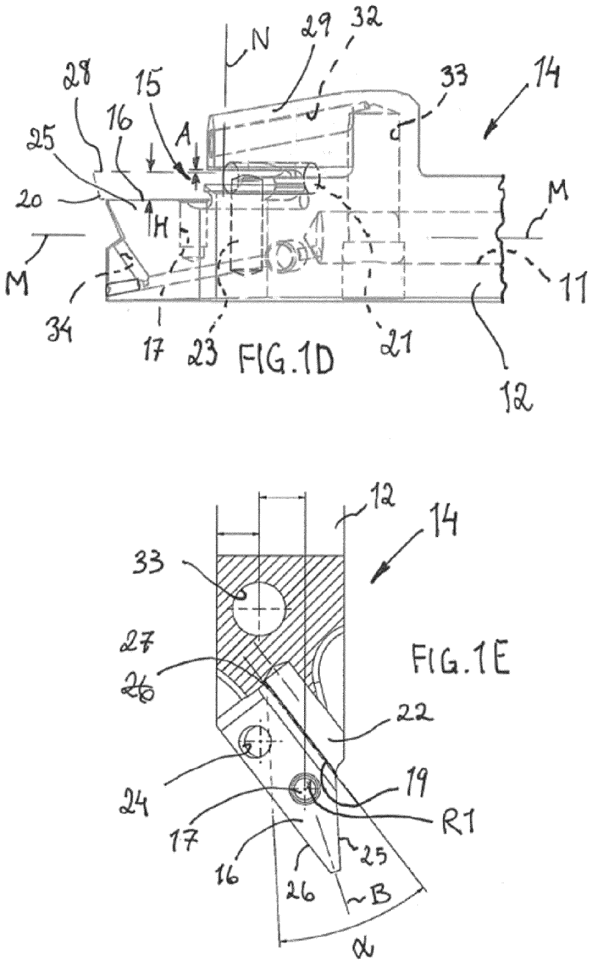

A cutting insert 20 suitable for the cutting tool is of a single-sided positive geometry with a height **H** (FIG. 1D) where a clearance surface forms an obtuse angle with a lower face of the cutting insert.

The cutting tool 10 comprises a tool holder body 14 having a shank portion 12 and a head portion 13 at a free end thereof. The shank portion is elongate and supposed to be secured to a tool post in a lathe. The shank portion may have a rectangular cross-section such as square. The shank portion defines a horizontal midplane **M.**

The shank portion and the head portion are usually made as a one-piece unit or monobloc. The monobloc is normally made from steel.

The head portion 13 has a seat 15 having at least one bottom surface 16, preferably extending parallel to the midplane **M.** The bottom surface may have a recess 17 to accommodate a locking member, such as a screw 18. The cutting insert 20 may have a through hole or mounting hole and the recess 17 may have a radius R1.

The bottom surface may be provided on a removable shim, not shown. A forward end of the head portion may terminate in a pointed portion (see Fig. 1E). The pointed portion in the top view is defined by sides 25 and 26. The sides 25 and 26 (or cutting insert sides shown in phantom in FIG. 1E) define an angle **α** that is 110° or less. That angle is divided by a bisector **B.** Usually the same line bisects the active cutting corner of the cutting insert. The seat 15 is bordered to one side by a first wall 19.

A first convex wall is at least partially constituted by a first pin 21, which is provided in or inserted into a bore or first cavity 22 that communicates with the wall 19 or is open lengthwise towards the cutting insert. The pin has a convexly curved outer peripheral surface formed by any of a large number of shapes, e.g., cylindrical. The pin 21 is made of a material, such as hardened steel or cemented carbide, having higher hardness than the material of the tool holder body 14.

The cavity 22 is a boring, which extends parallel or substantially parallel to the bottom surface 16. The cavity 22 breaks through or intersects the wall 19, and a small portion of the outer periphery of the pin 21 projects through the cavity 22 and thus extends past the wall 19 and into the seat in a direction towards the cutting insert. The pin projects a distance, which is at most 40% of the diameter of the pin.

The pin 21 is adapted to present a line of contact in relation to the cutting insert 20 that is parallel or substantially parallel to the bottom surface or the midplane **M.** The line of contact is spaced from the bottom surface or a shim corresponding to about a half of the thickness of a suitable cutting insert 20.

The pin may be inserted into the cavity 22 with press fit and/or by deforming material of the holder around the pin.

The seat comprises a second convex wall to define a stationary and well-defined contact in relation to the cutting insert, along a line of contact. The second convex wall is constituted by a second pin 23 inserted into a bore or second cavity 24 opening into the bottom surface 16. The bottom surface 16 may be flat all around the second cavity 24.The second cavity or boring or hole and the second pin may each have a center axis extending perpendicularly or substantially (≤ 11°) perpendicularly to the bottom surface. The second cavity 24, and thus the pin 23, inclines at an angle **β** relative to a normal to the at least one bottom surface 16 that is in the range of more than 0° and at least 21°, see FIG. 1B, where 0° implies perpendicular relationship to the bottom surface. It may be preferable to select the angle **β** in the range of 3 to 7°.

An inclination of the second pin 23 is aligned to a clearance surface angle of the cutting insert to achieve a line contact therewith.

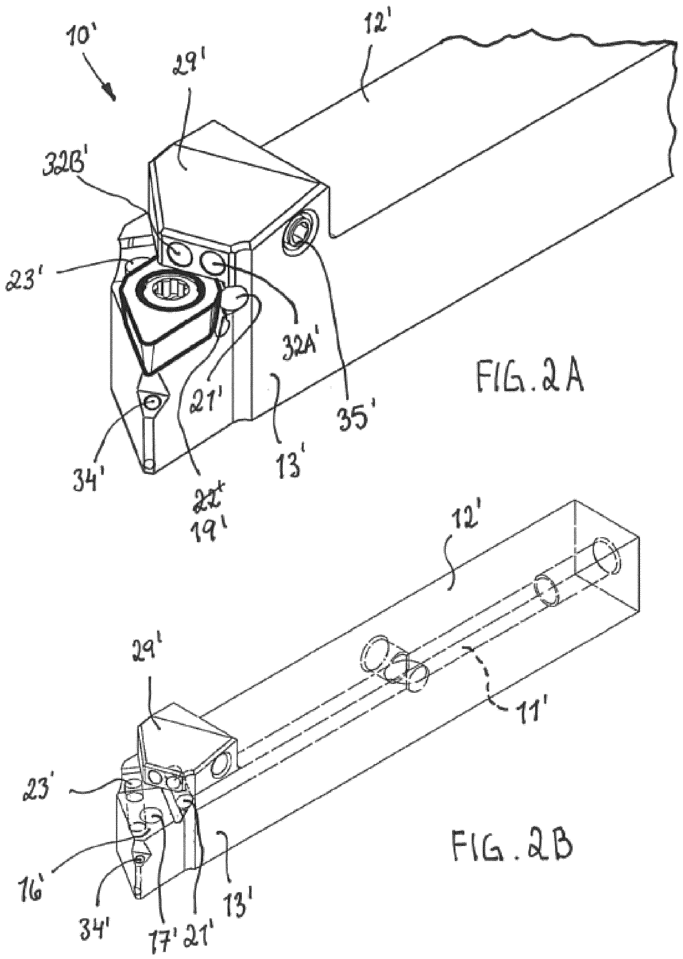

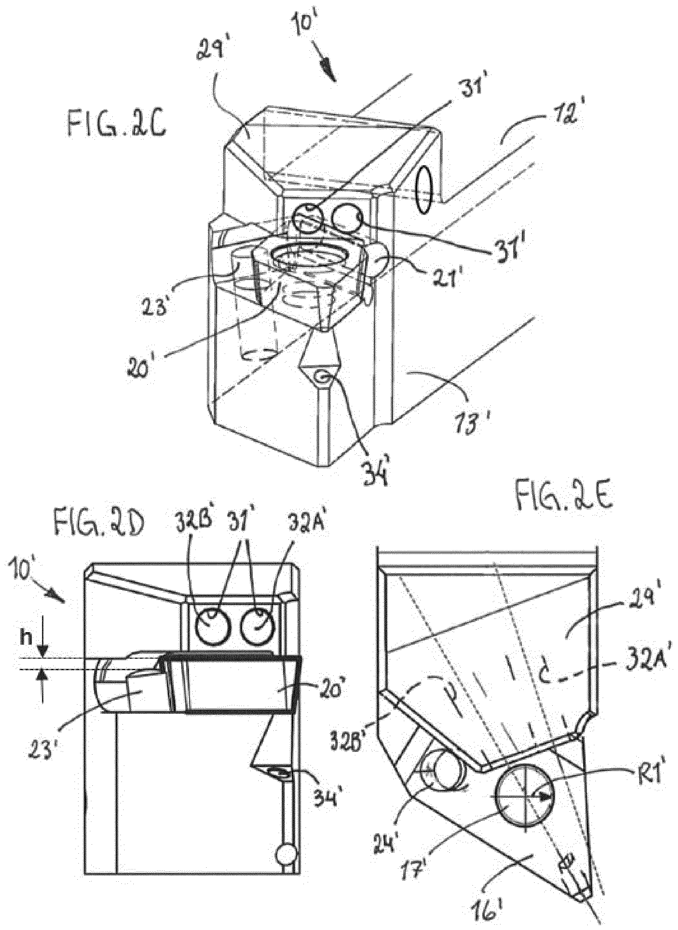

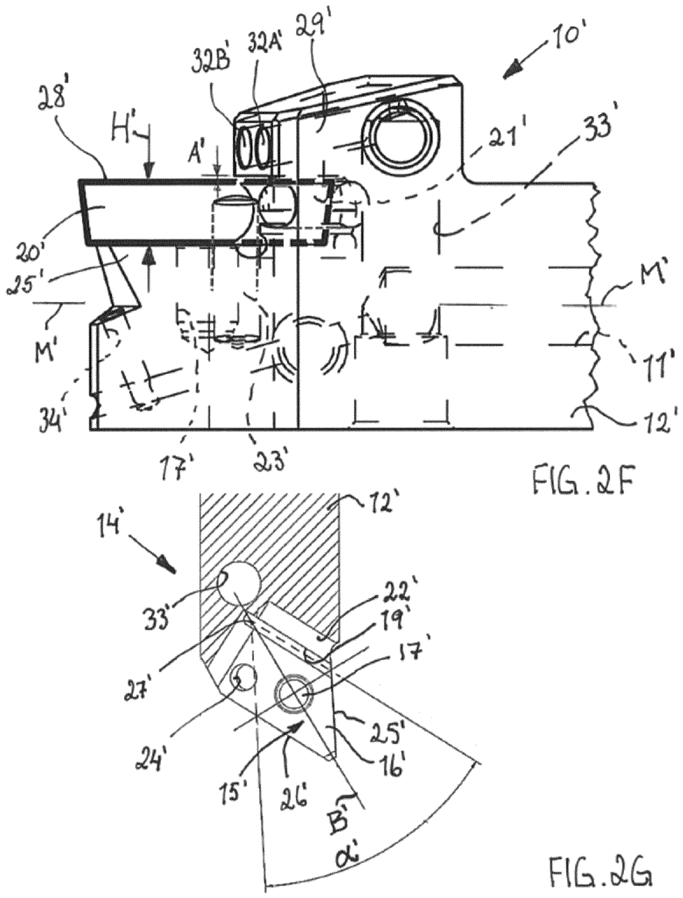

The second pin 23 is located at an opposite side of the bisector **B** relative to a major portion of the first pin 21. The major portion is at least 90% of the first pin 21. When inserted into the hole 24 the second pin will protrude from the bottom surface a distance that is smaller than the height **H** of the cutting insert. Stated another way, a perpendicular distance between the free end of the second pin 23 (or 23' or 23") and the associated cutting edge is depicted by **h** in FIG.2D. This will make sure that the pin does not reach an inactive cutting edge and therefore cannot damage or negatively influence the cutting edge.

The second pin 23 extends deeper into the head portion 13 than a height of an exposed part thereof that protrudes above the bottom surface 16.

The second pin 23 when viewed as in FIG. 1D will intersect a projection of the first pin 21. A center axis of the first pin 21 may be positioned at a level of a free or top end of the second pin 23 when viewed as in FIG. 1D.

The second pin 23 is adapted to present a line of contact in relation to the cutting insert 20 that is non-perpendicular to the bottom surface or the midplane **M**.

The convex walls are constituted by separate pins 21 and 23, which are perpendicular or substantially perpendicular to each other when seen in a side view as in FIG. 1D.

The first pin 21 is adapted to present a line of contact in relation to the cutting insert 20 that is parallel or substantially parallel to the bottom surface 16 and the second pin 23 is adapted to present a line of contact in relation to the cutting insert 20 that is non-perpendicular to the bottom surface. The pins 21 and 23 may be identical or at least of the same diameter such that drilling of the cavities 22, 24 can be facilitated or expedited. The pins 21 and 23 are not meant to be adjustable, i.e. they are usually fixed in position.

The first convex wall or the first pin 21 and the second convex wall or the second pin 23 may receive a wedge of a cutting insert that form an included angle that is 110° or less, for example 55° or not under 40°, to be able to hold a variety of cutting insert geometries including also narrow cutting inserts. Stated another way, tangents to the first convex wall 21 and the second convex wall 23 may form an angle **α** that is 110° or less.

The second pin 23 may be located to abut at about a quarter of a greatest diagonal length of the cutting insert from an inactive cutting corner (depicted by 27 in FIG. 1E).

The head portion 13 may be provided with an integral nozzle or inducer or roof portion or coolant conveying member 29, i.e. the coolant conveying member is integral with the tool holder body, which is immovable or not able to be removed without destroying the original construction of the head portion. The coolant conveying member may completely or partially or at least partially overlie or cover the cutting insert when viewed in top view as best seen in FIG. 1C.

A normal **N** to the at least one bottom surface 16 or the upper surface of the cutting insert 20 intersects the coolant conveying member 29, such that the coolant conveying member at least partially cover or overlies the cutting insert.

The coolant conveying member 29 in this embodiment is not meant to clamp on the cutting insert and is thus spaced from the upper surface 28 of the cutting insert by a distance **A** in the range of 0.2 to 3 mm in the direction of the normal **N.** Thus a lower side of the coolant conveying member 29 forms a slot with the bottom surface 16, wherein the smallest width of the slot is greater than a thickness of the cutting insert 20 including any shim. The relative position between the coolant conveying member and the insert seat is constant.

In other words, the coolant conveying member is spaced both from clamping means such as the locking member 18, and the cutting insert 20 when viewed in side view as for example in FIG. 1D.

The front face 30 of the coolant conveying member 29 contains an opening 31, which communicates with a coolant channel 32 that is generally directed towards the active cutting corner of the cutting insert. The coolant channel 32 slopes towards the opening 31 from a higher point where it connects to a vertical passage 33 that in turn connects to the coolant conduit 11. The coolant conduit 11 is in communication with a coolant source, not shown. The vertical passage 33 may be plugged at a lower end.

The front face 30 may be located in a plane **P** intersecting the bottom surface 16 and/or the cutting insert 20 (FIG. 1C). The plane **P** may be parallel to the normal **N.**

The plane **P** may intersect the bottom surface 16 at a distance from the radius center of the hole 17 that is less than 3 times the radius R1.

The roof portion 29 is arranged spaced apart from an extension of the hole 17.

The tool holder may have least one further coolant channel 34 that is provided below the bottom surface 16 for directing coolant towards an active clearance surface of the cutting insert 20. The channel 34 connects to the vertical passage 33 via a boring that is plugged at one end.

In use the shown tool will be turning metal work pieces while coolant may flow from the coolant source in order through the coolant conduit 11 in the shank 12, the vertical passage 33, the coolant channel 32 and from the opening 31 to at least one active cutting edge. Optionally, a jet stream of coolant is discharged from a second opening of the least one further coolant channel 34 below the bottom surface 16.

The tool is mounted as follows. The cutting insert 20 is placed against the bottom surface 16 of the seat 15 and pushed inwardly such that converging sides of the cutting insert abut the convex wall 21 and 23, respectively. The screw 18 is moved through the hole in the cutting insert and is threaded firmly into the recess 17. Thereby, the cutting insert is secured to the seat 15. Typically, the screw 18 is caused to mate with the threaded hole in the bottom surface. The threaded hole is ordinarily formed in the bottom surface in a location such that, when the threaded shaft of the screw is inserted through the mounting hole in the insert and screwed into the threaded hole, there is a slight offset of a longitudinal axis of the threaded shaft of the screw in a direction toward the convex walls of the seat from the location of the axis of the mounting hole. Nonetheless, the lower surface of the insert and the bottom surface 16 (both of which are typically flat) can be caused to lie flat against one another. As the screw is screwed further into the threaded hole, a head of the screw urges bottom and sides of the insert 20 into more complete contact with the bottom and convex walls of the seat.

Reference is made to FIGS. 2A to 2G showing a cutting tool 10' having a coolant conduit 11' in accordance with another aspect of the present invention. The drawings have been annotated with like numerals that indicate similar elements as in the previous described embodiment.

The shown cutting tool 10' may be a turning tool for external metal machining, preferably for use in a Swiss-type lathe as discussed above. Normally, a cutting tool for a Swiss-type lathe is relatively small, for example less than 20 cm from end to end and less than 3 cm in height.

The main difference from the previously described embodiment lies in the use of two coolant channels 32A' and 32B' in the coolant conveying member 29'. The front face 30' of the coolant conveying member 29' contains two openings 31', which each communicates with a coolant channel 32A', 32B' that is generally directed towards the active cutting corner of the cutting insert. The coolant channels 32' slope towards the openings 31' from a higher point where they connect to a vertical passage 33' that in turn connects to the coolant conduit 11'. The vertical passage 33' supplies fluid via a horizontal bore intersecting the inner ends of the coolant channels to the openings 31'. The horizontal bore is plugged by a screw 35'. The coolant conduit 11' is in communication with a coolant source, not shown.

The openings 31' in the front face 30' may be located in a plane **P'** intersecting the bottom surface 16' and/or the cutting insert 20' (FIG. 1C). The plane **P'** may be parallel to the normal **N'.** The cutting insert 20' may have a through hole or mounting hole and the recess 17' may have a radius R1'.

The directions of the coolant channels 32A', 32B' converge towards the cutting area.

The first pin 21' is adapted to present a line of contact in relation to the cutting insert 20' that is parallel or substantially parallel to the at least one bottom surface 16' and the second pin 23' is adapted to present a line of contact in relation to the cutting insert 20' that is non-perpendicular (≤ 11°) to the at least one bottom surface.

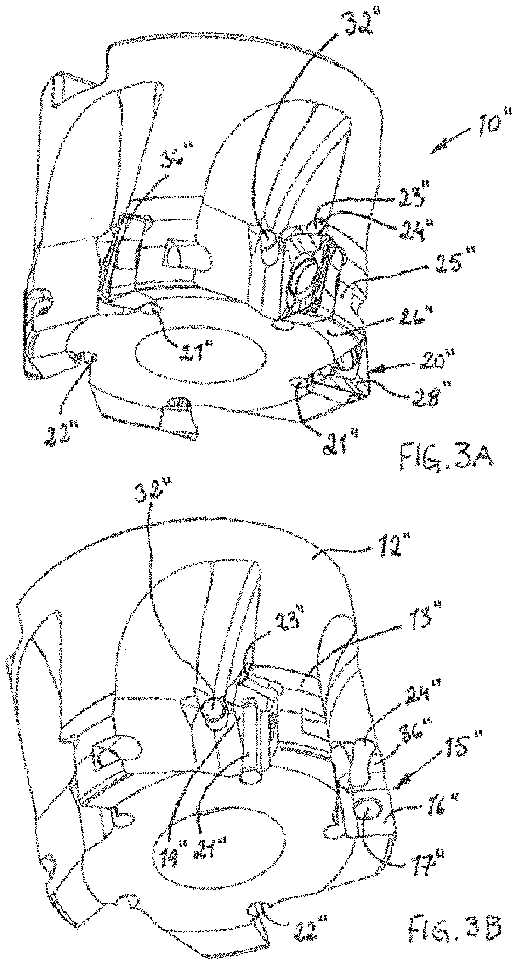

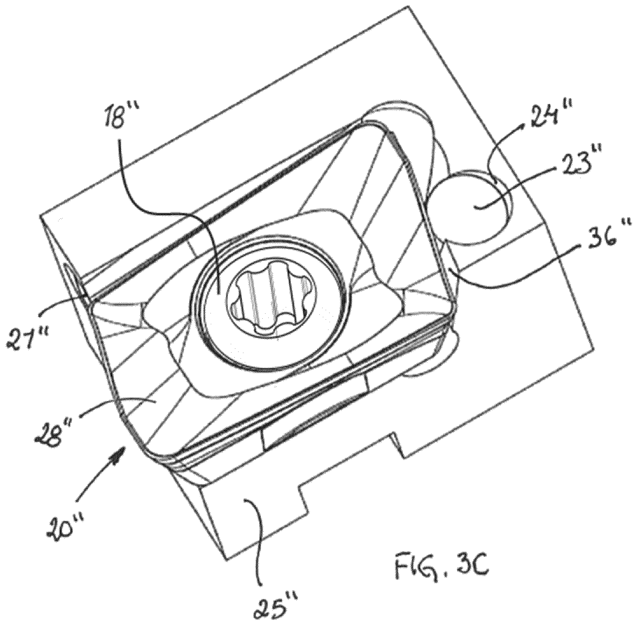

Reference is now made to FIGS. 3A, 3B and 3C showing a cutting tool 10" in accordance with another aspect of the present invention. The drawings have been annotated with like numerals that indicate similar elements as in the previously described embodiments. The cutting tool 10" relates to a tool for milling.

The cutting insert 20" is substantially the same as in applicant's European patent publication No. 1112137 regarding the cutting insert geometry. Thus, the cutting insert 20" is intended to be mounted in a tool holder body or a milling body 14" to be rotated in a milling machine. The milling body comprises at least one seat 15" in order to receive a cutting insert of for example substantially parallelepipedic shape. The cutting insert comprises two major sides and them uniting minor sides as well as upper 28" and lower sides, and comprises at least one pair of cutting edges which is formed at a transition of the upper side and a major side and a minor side of the cutting insert. The upper side 28" constitutes a chip surface and the major side and the minor side constituting active clearance or inactive clearance surfaces. Each pair of cutting edges consists of a major cutting edge at the major side and a minor cutting edge at the minor side, which intersect in the area of a cutting corner. The minor cutting edge is provided to generate a surface of a work piece. The major cutting edge slopes to form an acute angle with the lower side.

The head portion 13" has a seat 15" having at least one bottom surface 16", preferably extending at a positive axial angle relative to a rotational axis of the cutting tool. The bottom surface may have a recess 17" to accommodate a locking member, such as a screw. The cutting insert 20" may have a through hole or mounting hole and the recess 17" may have a radius. The bottom surface 16" may be bordered axially and radially by means of concave grooves to facilitate manufacturing precision of the bottom surface.

The bottom surface may be provided on a removable shim, not shown. The bottom surface is open radially at side 25" and axially at side 26". The sides 25" and 26" define an angle that is 110° or less. That angle is divided by a bisector. The seat 15 is bordered axially by a first wall 19".

A first convex wall is at least partially constituted by a first pin 21", which is provided in or inserted into a bore or first cavity 22" that communicates with the wall 19" or is open lengthwise towards a major side of the cutting insert. The pin has a convexly curved outer peripheral surface formed by any of a large number of shapes, e.g., cylindrical. The pin 21" is made of a material, such as hardened steel or cemented carbide, having higher hardness than the material of the tool holder body 14".

A small portion of the outer periphery of the pin 21" projects through the cavity 22" and thus extends past the wall 19" and into the seat in a direction towards the major side of the cutting insert. The pin projects a distance, which is at most 40% of the diameter of the pin.

The pin 21" is adapted to present a line of contact in relation to the cutting insert 20" that is parallel or substantially parallel to the bottom. The line of contact is spaced from the bottom surface or a shim corresponding to about a half of the thickness of a suitable cutting inserts 20".

The seat comprises a second convex wall 36" to define a stationary and well-defined contact in relation to the cutting insert, along a line of contact. The second convex wall 36" is constituted by a second pin 23" inserted into a bore or second cavity 24" opening at least partially into the axial concave groove. The second cavity or boring or hole and the second pin each have a center axis extending non-perpendicularly (≤ 11°) to the bottom surface. An inclination of the second pin 23" is aligned to the clearance surface angle of the cutting insert to achieve a line contact therewith. The second pin 23" is usually shorter than a depth of the bore 24" such that the second pin when mounted does not protrude from the surrounding steel body. The same relation applies for the first pin 23" and the bore 22".

The second pin 23" is located at an opposite side of the bisector or a diagonal at the bottom surface relative to a major portion of the first pin 21". When inserted into the hole 24" the second pin will protrude relative to a plane of the bottom surface a distance that is smaller than the height of the cutting insert. This will make sure that the pin does not reach a cutting edge and therefore cannot damage or negatively influence the cutting edge.

The second pin 23" is adapted to present a line of contact in relation to the cutting insert 20 that is non-perpendicular to the bottom surface.

The convex walls are constituted by separate pins 21" and 23", which are perpendicular or substantially perpendicular to each other when seen in a side view.

The first pin 21" is adapted to present a line of contact in relation to the cutting insert 20" that is parallel or substantially parallel to the at least one bottom surface 16" and the second pin 23" is adapted to present a line of contact in relation to the cutting insert 20" that is non-perpendicular to the at least one bottom surface.

The first convex wall or the first pin 21" and the second convex wall or the second pin 23" may receive a wedge of a cutting insert that form an included angle that is 110° or less. Stated another way, tangents to the first convex wall 21" and the second convex wall 23" may form an angle that is 110° or less.

The second pin 23" may be located to abut at or at about a mid area of the minor side of the cutting insert.

The head portion 13" may be provided with a coolant channel 32" that is generally directed towards the active cutting corner of the cutting insert. The coolant channel 32" connects to a coolant conduit that is in communication with a coolant source, not shown.

Tool life generally increases with increase in coolant supply pressure. This can be attributed to the ability of the high-pressure coolant to lift the chip and gain access closer to the cutting interface. This action leads to a reduction of the seizure region, thus lowering the friction coefficient, which in turn results in reduction in cutting temperature and cutting forces. Preferably the pressure used in the discussed embodiments is above 30 bar, preferably above 100 bar coolant pressure.

The present invention facilitates seat production while having a coolant opening fixed close to the active cutting area. There is a limited need for spare parts because the coolant nozzle is built into the tool holder design and therefore handling of small tools is facilitated.

If using a standard seat configuration the manufacturing cost would be high but in the present solution when using convex walls such as pins a seat can be produced that is easy to manufacture at a low cost while maintaining high quality with fine tolerances.

The invention is applicable for all types of insert seats such as for turning, milling, drilling and boring.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "major", "minor", "upper", "lower", "top", "bottom", "forward" and "rear" refer to features as shown in the current drawings and as perceived by the skilled person. When discussing contact between the second pin and the cutting insert in this text it is referred to contact with a clearance surface located below or trailing a cutting edge and thus the inactive clearance surface located below an inactive cutting edge. The second pin is located such that it does not damage any inactive cutting edge. A cutting edge is inactive when it is located at or indexed to an inactive position and does not participate in chip removal.

While this invention has been illustrated and described in accordance with a preferred embodiment, it is recognized that variations and changes may be made therein without departing from the invention as set forth in the claims.

## Claims

1. A cutting tool having
a tool holder body (14;14';14") having a shank portion (12;12') and a head portion (13;13');
an indexable cutting insert in a cutting insert seat comprising;
a first convex wall (19;19';19") and a second convex wall and at least one bottom surface (16;16';16"), at which the cutting insert is supposed to abut, the cutting insert having a cutting edge and a clearance surface,
wherein the convex walls are constituted by separate pins (21, 23; 21', 23'; 21", 23"),
which are perpendicular or substantially perpendicular to each other when seen in a side view, wherein the first convex wall is constituted by a first pin (21; 21'; 21") that is adapted to present a line of contact in relation to the cutting insert (20;20';20") that is parallel or substantially parallel to the at least one bottom surface (16;16';16"), and the second convex wall is constituted by a second pin (23; 23'; 23") **characterised in that** the second pin (23; 23', 23") is adapted to present a line of contact in relation to the cutting insert that is non-perpendicular to the at least one bottom surface, and **in that** the second convex wall is situated below the cutting edge, wherein the second pin (23;23';23") protrudes from the bottom surface (16) a distance that is smaller than a height (H) of the cutting insert.

2. The tool according to claim 1, wherein each pin (21,23;21',23';21",23") is stationarily mounted to the shank portion.

3. The tool according to anyone of the preceding claims, wherein each pin (21,23;21',23';21",23") is formed of a harder material than the shank portion.

4. The tool according to anyone of the preceding claims, wherein a clamping screw (18;18';18") extends through the cutting insert (20;20';20"), a center axis of said clamping screw extending parallel or substantially parallel to a center axis of the second pin (23;23';23").

5. The tool according to anyone of the preceding claims, wherein a second cavity (24) and the second pin (23;23';23") extend at an angle to the at least one bottom surface in the range of less than 90° and at least 69°.

6. The tool according to anyone of the preceding claims, wherein an inclination of the second pin (23;23';23") is the same as a clearance surface angle of an associated side of the cutting insert.

7. The tool according to anyone of the preceding claims, wherein the second pin (23;23';23") inclines at an angle (β) relative to a normal to the at least one bottom surface (16) that is greater than 0° and not more than 21°.

8. The tool according to anyone of the preceding claims, wherein a bisector (B) bisects an active cutting corner of the cutting insert and wherein the second pin (23;23';23") is located at an opposite side of the bisector relative to a major portion of the first pin (21;21';21").

9. The tool according to anyone of the preceding claims, wherein the second pin (23;23') extends deeper into the head portion (13;13') than a height of an exposed part thereof that protrudes above the bottom surface (16;16').

10. The tool according to anyone of the preceding claims, wherein the bottom surface (16;16') is flat all around the second cavity (24;24').

11. The tool according to anyone of the preceding claims, wherein the cutting tool (10;10';10") has a coolant conduit (11;11'), and comprises at least one coolant channel (32;32';32") in flow communication with the coolant conduit.

## Patentansprüche

1. Schneidwerkzeug mit:
einem Werkzeughalterkörper (14, 14', 14"), der einen Schaftabschnitt (12, 12') und einen Kopfabschnitt (13, 13') hat,
einem indexierbaren Schneideinsatz in einem Schneideinsatzsitz, welcher aufweist:
eine erste konvexe Wand (19, 19', 19") und eine zweite konvexe Wand und zumindest eine Bodenfläche (16, 16', 16"), an welcher sich der Schneideinsatz abstützen soll, wobei der Schneideinsatz eine Schneidkante und eine Freifläche hat,
wobei die konvexen Wände gebildet werden durch separate Stifte (21, 23; 21', 23'; 21", 23"), welche in einer Seitenansicht gesehen senkrecht oder im Wesentlichen senkrecht zueinander verlaufen, wobei die erste konvexe Wand durch einen ersten Stift (21, 21', 21") gebildet wird, der dafür ausgelegt ist, eine Kontaktlinie relativ zu dem Schneideinsatz (20, 20', 20") zu bilden, die parallel oder im Wesentlichen parallel zu der zumindest einen Bodenfläche (16, 16', 16") ist, und die zweite konvexe Wand gebildet wird durch einen zweiten Stift (23, 23', 23"),
**dadurch gekennzeichnet, dass** der zweite Stift (23, 23', 23") dafür ausgelegt ist, eine Kontaktlinie relativ zu dem Schneideinsatz zu bilden, die nicht senkrecht zu der zumindest einen Bodenfläche ist und dass die zweite konvexe Wand unterhalb der Schneidkante liegt, wobei der zweite Stift (23, 23', 23") von der Bodenfläche (16) um einen Abstand hervorsteht, der kleiner als die Höhe (H) des Schneideinsatzes ist.

2. Werkzeug nach Anspruch 1, wobei jeder Stift (21, 23; 21', 23'; 21", 23") stationär an dem Schaftabschnitt montiert ist.

3. Werkzeug nach einem der vorstehenden Ansprüche, wobei jeder Stift (21, 23; 21', 23', 21", 23") aus einem härteren Material hergestellt ist als der Schaftabschnitt.

4. Werkzeug nach einem der vorstehenden Ansprüche, wobei eine Klemmschraube (18, 18', 18") sich durch den Schneideinsatz (20, 20', 20") erstreckt und wobei eine zentrale Achse der Klemmschraube sich parallel oder im Wesentlichen parallel zu einer zentralen Achse des zweiten Stiftes (23, 23', 23") erstreckt.

5. Werkzeug nach einem der vorstehenden Ansprüche, wobei sich eine zweite Aussparung (24) und der zweite Stift (23, 23', 23") unter einem Winkel in dem Bereich von weniger als 90° und mindestens 69° gegenüber der zumindest einen Bodenfläche erstrecken.

6. Werkzeug nach einem der vorstehenden Ansprüche, wobei die Neigung des zweiten Stiftes (23, 23', 23") dieselbe wie der Freiflächenwinkel einer zugehörigen Seite des Schneideinsatzes ist.

7. Werkzeug nach einem der vorstehenden Ansprüche, wobei der zweite Stift (23, 23', 23") sich unter einem Winkel (β) relativ zu einer Normalen zu der zumindest einen Bodenfläche (16) erstreckt, der größer als 0° ist und nicht mehr als 21° beträgt.

8. Werkzeug nach einem der vorstehenden Ansprüche, wobei eine Winkelhalbierende (B) eine aktive Schneidkante des Schneideinsatzes schneidet und wobei der zweite Stift (23 ,23', 23") auf einer entgegengesetzten Seite der Winkelhalbierenden relativ zu einem Hauptteil des ersten Stiftes (21, 21', 21") angeordnet ist.

9. Werkzeug nach einem der vorstehenden Ansprüche, wobei der zweite Stift (23, 23') sich tiefer in den Kopfabschnitt (13, 13') hineinerstreckt als eine Höhe eines freiliegenden Teils desselben oberhalb der Bodenfläche (16, 16') hervorsteht.

10. Werkzeug nach einem der vorstehenden Ansprüche, wobei die Bodenfläche (16, 16') um die zweite Aussparung (24, 24') herum eben ist.

11. Werkzeug nach einem der vorstehenden Ansprüche, wobei der Schneideinsatz (10, 10', 10") eine Kühlmittelleitung (11, 11') hat und zumindest einen Kühlmittelkanal (32, 32', 32") in Strömungsverbindung mit der Kühlmittelleitung hat.

## Revendications

1. Outil de coupe présentant
un corps de support d'outil (14 ; 14' ; 14") présentant une partie de queue (12 ; 12') et une partie de tête (13 ; 13') ;
une plaquette de coupe amovible dans un siège de plaquette de coupe comprenant ;
une première paroi convexe (19; 19' ; 19") et une seconde paroi convexe et au moins une surface de fond (16 ; 16' ; 16"), au niveau de laquelle la plaquette de coupe est supposée venir en butée, la plaquette de coupe présentant une arête de coupe et une surface de dépouille,
où les parois convexes sont constituées par des broches distinctes (21, 23 ; 21', 23' ; 21", 23"), lesquelles sont perpendiculaires ou sensiblement perpendiculaires l'une par rapport à l'autre selon une vue d'observation de côté, où la première paroi convexe est constituée par une première broche (21 ; 21' ; 21") qui est conçue pour présenter une ligne de contact par rapport à la plaquette de coupe (20 ; 20'; 20") qui est parallèle ou sensiblement parallèle à la au moins une surface de fond (16; 16'; 16"), et la seconde paroi convexe est constituée par une seconde broche (23 ; 23' ; 23") **caractérisé en ce que** la seconde broche (23 ; 23' ; 23") est conçue pour présenter une ligne de contact par rapport à la plaquette de coupe qui est non perpendiculaire à la au moins une surface de fond, et **en ce que** la seconde paroi convexe est située sous l'arête de coupe, où la seconde broche (23 ; 23' ; 23") dépasse de la surface de fond (16) d'une distance qui est inférieure à une hauteur (H) de la plaquette de coupe.

2. Outil selon la revendication 1, dans lequel chaque broche (21, 23 ; 21', 23' ; 21", 23") est montée de manière stationnaire sur la partie de queue.

3. Outil selon l'une quelconque des revendications précédentes, dans lequel chaque broche (21, 23 ; 21', 23' ; 21", 23") est constituée d'un matériau plus dur que celui de la partie de queue.

4. Outil selon l'une quelconque des revendications précédentes, dans lequel une vis de serrage (18; 18'; 18") s'étend à travers la plaquette de coupe (20 ; 20' ; 20"), un axe central de ladite vis de serrage s'étendant parallèlement ou sensiblement parallèlement à un axe central de la seconde broche (23 ; 23' ; 23").

5. Outil selon l'une quelconque des revendications précédentes, dans lequel une seconde cavité (24) et la seconde broche (23 ; 23' ; 23") s'étendent à un angle par rapport à la au moins une surface de fond dans la plage de moins de 90° et d'au moins 69°.

6. Outil selon l'une quelconque des revendications précédentes, dans lequel une inclinaison de la seconde broche (23 ; 23' ; 23") est la même qu'un angle de surface de dépouille d'un côté associé de la plaquette de coupe.

7. Outil selon l'une quelconque des revendications précédentes, dans lequel la seconde broche (23 ; 23' ; 23") s'incline à un angle (β) par rapport à une normale à la au moins une surface de fond (16) qui est supérieur à 0° et non supérieur à 21°.

8. Outil selon l'une quelconque des revendications précédentes, dans lequel une bissectrice (B) divise en deux un coin de coupe actif de la plaquette de coupe et où la seconde broche (23 ; 23' ; 23") est située sur un côté opposé de la bissectrice par rapport à une partie principale de la première broche (21 ; 21' ; 21").

9. Outil selon l'une quelconque des revendications précédentes, dans lequel la seconde broche (23 ; 23') s'étend plus profond dans la partie de tête (13 ; 13') qu'une hauteur d'une partie exposée de celle-ci qui dépasse au-dessus de la surface de fond (16 ; 16').

10. Outil selon l'une quelconque des revendications précédentes, dans lequel la surface de fond (16 ; 16') est plate tout autour de la seconde cavité (24 ; 24').

11. Outil selon l'une quelconque des revendications précédentes, où l'outil de coupe (10 ; 10' ; 10") présente un conduit à réfrigérant (11 ; 11'), et comprend au moins un canal à réfrigérant (32 ; 32'; 32") en communication de fluide avec le conduit à réfrigérant.
